(19) Europäisches Patentamt
European Patent Office
Office européen des brevets

(11) **EP 2 714 608 B1**

(12) **FASCICULE DE BREVET EUROPEEN**

(45) Date de publication et mention de la délivrance du brevet:
**15.08.2018 Bulletin 2018/33**

(51) Int Cl.:
***C03C 17/34*** *(2006.01)*     ***C03C 17/36*** *(2006.01)*

(21) Numéro de dépôt: **12722739.5**

(22) Date de dépôt: **23.05.2012**

(86) Numéro de dépôt international:
**PCT/EP2012/059552**

(87) Numéro de publication internationale:
**WO 2012/160075 (29.11.2012 Gazette 2012/48)**

(54) **SUBSTRAT VERRIER TRANSPARENT PORTANT UN REVETEMENT DE COUCHES SUCCESSIVES**

TRANSPARENTES GLASSUBSTRAT MIT EINER BESCHICHTUNG AUS AUFEINANDERFOLGENDEN SCHICHTEN

TRANSPARENT GLASS SUBSTRATE HAVING A COATING OF CONSECUTIVE LAYERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2011 BE 201100317**

(43) Date de publication de la demande:
**09.04.2014 Bulletin 2014/15**

(73) Titulaire: **AGC Glass Europe**
**1348 Louvain-la-Neuve (BE)**

(72) Inventeurs:
 • **TIXHON, Eric**
   **6040 Jumet (BE)**
 • **DIDIER, Delphine**
   **6040 Jumet (BE)**

(74) Mandataire: **Agustsson, Sveinn Otto et al**
**AGC Glass Europe S.A.**
**Rue Louis Blériot, 12**
**6041 Gosselies (BE)**

(56) Documents cités:
| | |
|---|---|
| EP-A1- 0 544 577 | EP-A1- 1 872 652 |
| WO-A1-02/48064 | WO-A1-99/02338 |
| US-A- 4 419 386 | US-B1- 6 174 599 |

**Description**

La présente invention concerne un substrat transparent revêtu d'une succession de couches dont au moins une est une couche faible émissivité, dénommée « couche low-E », l'empilage présentant des valeurs de facteurs solaires élevées. Le substrat ainsi revêtu constitue une structure fonctionnelle de verre, typiquement d'au moins un double-vitrage.

La fabrication de divers empilages comportant une succession de couches de composés notamment à base de métaux ou de semi-conducteurs et d'oxydes, de nitrures, d'oxynitrures de ceux-ci sur un substrat transparent, tel que le verre, pour des effets optiques et électriques spécifiques sont connus. On peut ainsi citer des empilages pour des applications solaires, telles que photovoltaïques, pour des applications architecturales, pour lesquelles on recherche des propriétés réfléchissantes ou anti-réfléchissantes, de faible ou grand facteur solaire, ayant également une stabilité de couleur quel que soit l'angle d'observation, pour l'automobile, pour des usages ménagers, tels que des portes de fours etc.

Parmi les structures multi-couches sur substrat verrier, on trouve des empilages conférant des propriétés low-E grâce à des composés tels que $SnO_2$ :F, $SnO_2$ :Sb, ITO (oxyde d'indium dopé à l'étain) ou les métaux de type argent. Il peut être avantageux d'inclure entre le substrat et la couche fonctionnelle low-E, une couche évitant, d'une part, la migration des ions sodium à partir du verre pour réduire l'irisation et, d'autre part, de générer une variation des couleurs en réflexion à différents angles d'observation du verre revêtu.

Pour les besoins architecturaux, c'est-à-dire pour les bâtiments ou immeubles dotés de vitrages, il s'avère que certaines exigences environnementales imposent des structures verrières telles que le facteur solaire (FS ou g) soit le plus élevé possible tout en minimisant l'émissivité (E) dans la gamme de l'infrarouge (IR) lointain, c'est-à-dire pour des longueurs d'ondes supérieures à 2500 nm. Des telles structures vitrées, notamment des double-vitrages munis d'une couche basse-émissivité, assurent donc une double fonction : une isolation thermique très satisfaisante et la conservation de la chaleur dans un bâtiment grâce à la couche low-E, et un apport énergétique « gratuit » lié au FS élevé. On peut, à titre d'exemple, citer les substrats verriers : verre clair - $SiO_x$ - $SnO_2$ :F dont les performances sont telles que l'émissivité est aussi basse que 0,1 et FS est d'environ 73% pour un double-vitrage dont l'un des substrats verriers est revêtu de ces couches. La sous-couche de $SiO_x$ est dans ce cas utilisée pour empêcher la migration des ions sodium à partir du verre et également pour permettre la neutralisation de la couleur en réflexion du verre revêtu, c'est-à-dire éviter les couleurs interférentielles en réflexion.

Un autre paramètre qu'il convient de considérer est la performance énergétique d'une fenêtre dans son ensemble, constituée d'un vitrage et d'un châssis approprié, définie par l'acronyme « WER » - « Window Energy Rating ». On peut ainsi classer les fenêtres, telles qu'à base de double-vitrages, selon un degré de performances énergétiques représentées par des lettres allant de A à G, le « label A » étant la performance la plus efficace. Par exemple, on peut calculer le WER pour un double-vitrage muni d'un cadre de support du verre selon les critères énoncés par « British Fenestration Rating Council - BFRC » (Londres-Grande Bretagne). Selon l'organisme BFRC, l'évaluation du WER se fait par la formule :

$$\text{WER (kWh/m}^2\text{/an)} = (218,6 \text{ x g}) - 68,5 \text{ x (U + L),}$$

où

g= FS : facteur solaire de la fenêtre,

U(fenêtre) = coefficient thermique (W/m$^2$.K) de la fenêtre incluant le châssis de support et le vitrage ;

L : déperdition de chaleur liée au passage d'air à travers la fenêtre (W/m$^2$.K).

Par conséquent, des valeurs positives de WER montrent un gain de kWh (kilowatts heure) par mètre carré de fenêtre et par an, des valeurs négatives signifient que la fenêtre induit une consommation d'énergie. Selon cette formule, une fenêtre de label A présente un WER positif, un label B est utilisé pour des fenêtres ayant un WER compris entre -10 et 0, le label G indique une fenêtre ayant un WER inférieur à -70. Pour des fenêtres destinées au marché de Grande-Bretagne, un label A est très fortement indiqué.

La demande de brevet WO 94/25410 décrit des vitrages comprenant un substrat en verre muni d'une couche mince fonctionnelle, cette dernière présentant, en particulier, des propriétés basse émissivité, et dont le choix de couleur en réflexion « côté couche » se situe dans la gamme des bleus. Ce document décrit des empilages comportant (i) un revêtement interne, placé directement sur le verre, à base d'oxynitrures ou d'oxycarbures de silicium ou à base d'oxydes métalliques, telles que $TiO_2$, $SnO_2$ et ZnO, d'indices de réfraction compris entre 1,65 et 1,90 et dont l'épaisseur varie entre 70 et 135 nm, (ii) une couche fonctionnelle, d'indice de réfraction voisin de 2, d'épaisseur comprise entre 300 et 450 nm, étant par exemple SnO$_2$ :F, et (iii) une couche externe, placée sur la couche fonctionnelle, laquelle est notamment SiO$_2$, l'épaisseur variant entre 70 et 110 nm, d'indice de réfraction entre 1,40 et 1,70. Un substrat ainsi revêtu, monté en double-vitrage, présente une réflexion lumineuse d'au plus 15%, une couleur en réflexion dans les bleus, notamment entre 465 et 480 nm, et une pureté en réflexion « côté couche » d'au plus 5%.

Le brevet US6174599B1 décrit des vitrages comprenant un verre muni d'une couche mince fonctionnelle, cette dernière présentant, en particulier, des propriétés de basse émissivité, et dont le choix de couleur en réflexion « côté couche » se situe dans la gamme des bleus. Ce document décrit des empilages comportant (i) un revêtement interne, placé directement sur le verre, notamment à base d'oxyde de silicium, oxycarbure de silicium ou oxynitrure de silicium, qui présente un gradient d'indice de réfraction, (ii) une couche fonctionnelle, d'indice de réfraction ente 1.8 et 2, d'épaisseur entre 350 et 550nm étant par exemple SnO$_2$ :F, et (iii) une couche externe, placée sur la couche fonctionnelle, laquelle est notamment SiO$_2$, l'épaisseur variant entre 70 et 120nm, d'indice de réfraction entre 1.4 et 1.7. Un substrat ainsi revêtu présente une transmission lumineuse d'au moins 75%, une couleur en réflexion dans les bleus et une émissivité d'au plus 0.18. Des couleurs en réflexion avec a* < o sous tous les angles en même temps que la stabilité angulaire ∆a*b*" < 3.5 ne sont pas obtenues.

L'un des buts de l'invention est de fournir un substrat verrier transparent revêtu de couches, l'ensemble constituant un empilage, lequel substrat verrier est constitutif d'un double- ou triple-vitrage. Ainsi, un tel double- ou triple-vitrage ne cherche pas simplement à optimiser une de ses propriétés, mais répond au compromis de couleur neutre en réflexion et de stabilité de couleur quel que soit l'angle d'observation, de faible émissivité, avantageusement inférieure ou égale à 0,12 et de FS le plus élevé possible, permettant l'obtention d'un WER positif pour une fenêtre à base d'un tel vitrage placé dans un châssis approprié pour atteindre ces valeurs de WER. Egalement, il est nécessaire que le vitrage présente un « haze » inférieur à 1%, voire inférieur à 0,6% afin d'éviter un aspect « laiteux » indésirable.

L'invention concerne donc un substrat verrier transparent portant un revêtement comprenant dans l'ordre :

- une première couche de neutralisation de couleurs en réflexion,

- une deuxième couche, de faible émissivité, constituée essentiellement de SnO$_2$:F, d'épaisseur comprise entre 455 et 800 nm, et

- une troisième couche, constituée essentiellement de SiO$_x$, x étant inférieur ou égal à 2, d'épaisseur comprise entre 40 et 65 nm ou entre 140 et 180 nm.

Le Demandeur a montré que, grâce au choix des matériaux constitutifs des couches de l'empilage d'un substrat de verre transparent et de leur épaisseur, on peut constituer des double-vitrages atteignant des performances accrues en termes de facteur solaire, de WER, d'émissivité et en même temps une stabilité de la couleur neutre à différents angles d'observation. Il est possible d'atteindre pour le vitrage des valeurs de FS d'au moins 73%, et même voisines de 75%, voire supérieures, jusqu'à 81%, avec une valeur de E inférieure ou égale à 0,12, permettant l'obtention d'un WER positif. En même temps la neutralité de couleur à divers angles d'observation peut être conservée, avec a*<o, avantageusement -1 ≤ a* ≤ -3, et b*<5, préférentiellement -6 ≤ b* ≤ 5, avantageusement -5 ≤ b* ≤ 5, et très avantageusement -2 ≤ b* ≤ 2 (valeurs en réflexion à un angle d'observation compris entre 8° et 55° - Illuminant D65), ce qui est aussi le cas pour un triple-vitrage. Ces valeurs de a* et b* permettent de conserver une neutralité de couleur en réflexion, c'est-à-dire que de légères réflexions dont la teinte voulue est vert-jaunâtre ou bleu-vert est autorisée, tout en évitant une réflexion rouge indésirée, esthétiquement non acceptable, et de conférer au vitrage une stabilité de couleur en réflexion quel que soit l'angle d'observation, qui est mesurée par ∆a*b* ayant pour valeur au plus 3,5 (voir plus loin). Dans le cadre de l'invention, la neutralité et la stabilité en réflexion sont observées ou mesurées par rapport au côté extérieur d'un bâtiment, c'est-à-dire côté « P1 ». L'homme du métier trouvera tous les détails et toutes les indications relatifs aux mesures de a* et b* dans la littérature, notamment sur la base de travaux de Ray G. Gordon et de R.S. Hunter, tels que décrits dans les brevets US 4,377,613 ; US 4,187,336 et US 4,419,386. En outre, les valeurs de « haze » peuvent être maintenues aussi basses que possible, inférieures à 1%, voire inférieures à 0,6%. Cependant, pour obtenir les valeurs de E ci-dessus, il est requis des épaisseurs de SnO$_2$ :F telles que revendiquées, ce qui malheureusement peut aller à l'encontre des faibles valeurs de « haze » souhaitées. Par conséquent, pour y parvenir, le procédé de dépôt du SnO$_2$ :F inclut une présence d'acide inorganique dans les précurseurs, tel que HCl ou HNO$_3$, dont l'effet est « d'araser » ou d'aplanir la rugosité de cette couche, selon l'enseignement de WO 2010/107998.

Un des avantages de l'invention est de permettre, en particulier pour des double-vitrages ou triple vitrages, l'obtention de ces performances sans recourir à l'utilisation nécessaire d'un ou plusieurs verres extra-clairs, lesquels sont connus pour augmenter FS, et/ou sans l'utilisation de krypton ou xenon en tant que gaz de remplissage dans ces double-vitrages, lesquels sont connus pour diminuer U.

Le Demandeur a donc montré que pour atteindre ces objectifs, il était nécessaire de choisir, entre autres, une épaisseur de couche de SiO$_x$ (la troisième couche) qui permet d'accroître le FS tout en autorisant une neutralité et stabilité de couleur en réflexion. Par ailleurs, pour atteindre des U(double-vitrage) les plus faibles possibles, à savoir typiquement inférieurs ou égaux à 1,4 W/m$^2$.K, il est nécessaire de recourir à des épaisseurs de SnO$_2$:F selon l'invention. De façon plus générale, c'est bien la combinaison de couches particulières avec des plages d'épaisseurs spécifiques qui permet d'atteindre cet objectif, car l'optimisation d'un paramètre donné, tel que FS, E ou la stabilité de la couleur, influe sur les performances des autres paramètres. Il est également requis que les empilages puissent être fabriqués à l'échelle industrielle, avantageusement en ligne, au niveau du bain d'étain fondu ou dans la galerie située après la zone de bain d'étain, avec des mises en oeuvres optimisées, notamment sans coûts supplémentaires rédhibitoires et sans encrassement notable des réacteurs.

Des fenêtres munies de tels vitrages, double ou triple-vitrages, avec des châssis de référence, typiquement représentant 25% de la surface de la fenêtre et dont le U châssis est au plus 1,2 W/m$^2$.K, présentent des labels A pour le WER, avec des valeurs a*<0 et b*<5 en réflexion. L'homme du métier sélectionne le châssis approprié, étant en outre observé que les effets de l'invention sont liés aux couches et à leurs épaisseurs. Dans le cadre de l'invention, la fenêtre doit être comprise dans son acception la plus large, c'est-à-dire qu'elle peut être utilisée aussi bien dans des bâtiments domestiques qu'industriels, ou bien encore comme éléments de façade vitrée de bâtiments, de type V.E.A (Vitrage Extérieur Accrochés).

Le facteur solaire (FS) est mesuré selon la norme EN 410.

Les valeurs a* et b* sont obtenues selon le système colorimétrique L*a*b* établie par la Commission Internationale de l'Eclairage (CIE) avec la norme illuminant D65 qui représente un état de la lumière du jour avec une température de couleur équivalente à 6500 K.

Les trois composantes L*, a* et b* sont communément représentées par un espace tridimensionnel. La composante L* qui est la pureté est représentée par un axe vertical qui va de 0 (noir) à 100 (blanc). Dans le plan horizontal, la composante a* représente sur un axe la gamme de couleurs allant du rouge (a* positif) vers le vert (a* négatif) en passant par le gris (a*=0) et la composante b* représente sur un deuxième axe la gamme de couleurs allant du jaune (b* positif) vers le bleu (b* négatif) en passant par le gris (b*=0).

Lorsque les valeurs de a* et b* en réflexion sont faibles, la couleur est considérée comme étant neutre. En plus de la neutralité, le marché du bâtiment en particulier réclame des couleurs en réflexion qui évitent les valeurs de a* ≥ 0.

La stabilité angulaire de la couleur, de surcroît neutre, est établie par la mesure de Δa*b* en réflexion. Plus cette valeur est faible, plus la neutralité de la couleur est conservée à divers angles d'observation. Cette mesure de Δa*b* est une valeur moyenne résultant de celles établies pour chaque angle d'observation de 8°, 20°, 30°, 45° et 55°. Ainsi,

$$\Delta a^*b^*_{(20°)}: [(a^*_{8°} - a^*_{20°})^2 + (b^*_{8°} - b^*_{20°})^2]^{1/2}$$

$$\Delta a^*b^*_{(30°)}: [(a^*_{8°} - a^*_{30°})^2 + (b^*_{8°} - b^*_{30°})^2]^{1/2}$$

$$\Delta a^*b^*_{(45°)}: [(a^*_{8°} - a^*_{45°})^2 + (b^*_{8°} - b^*_{45°})^2]^{1/2}$$

$$\Delta a^*b^*_{(55°)}: [(a^*_{8°} - a^*_{55°})^2 + (b^*_{8°} - b^*_{55°})^2]^{1/2}$$

L'angle d'observation $\alpha$ (8°-55°) est l'angle d'inclinaison du vitrage mesuré par rapport à un axe perpendiculaire au vitrage (a = 0°). Les valeurs de Δa*b* pour les double- et triple-vitrages sont avantageusement d'au plus 3,5, de préférence d'au plus 3.

Les double-vitrages, comportant un empilage de l'invention, sont ceux classiquement utilisés dans le domaine architectural, des substrats verriers séparés l'un de l'autre par un espace de 14-17 mm, espace rempli d'un gaz rare, de type argon. Le substrat transparent représente avantageusement un verre clair ou extra-clair, de diverses épaisseurs, typiquement comprises entre environ 3,8 mm et 8 mm. Par verre extra-clair, on entend un verre comprenant une teneur maximale en fer, exprimé sous forme de Fe$_2$O$_3$, inférieure à 0,04% en poids, en particulier inférieure à 0,02% en poids. Par verre clair, on entend un verre comprenant une teneur maximale en fer, exprimé sous forme de Fe$_2$O$_3$, allant de 0,04 à 0,4% en poids.

La première couche a pour fonction de permettre la neutralisation de la couleur en réflexion du verre revêtu, c'est-à-dire éviter les couleurs interférentielles en réflexion. Elle est de préférence en contact direct avec le substrat de verre, et est avantageusement une mono-couche constituée essentiellement d'oxynitrures de silicium SiO$_x$N$_y$, ou d'oxy-carbures de silicium SiO$_x$C$_y$, x étant inférieur à 2, dont l'indice de réfraction se situe dans la plage 1,65-1,75, l'épaisseur de cette couche étant comprise entre 55 et 95 nm, avantageusement entre 60 et 90 nm, et, très avantageusement, entre 70 et 90 nm. Les valeurs de « x » et « y » sont choisies pour ajuster les valeurs des indices de réfraction. De manière générale on désigne cette dernière variante de couche de neutralisation par $SiO_x$, x étant inférieur à 2.

Egalement, la première couche de neutralisation peut être une couche mixte constituée essentiellement d'oxydes de Sn et Si, dont l'épaisseur est comprise entre 55 et 95 nm, avantageusement entre 60 et 90 nm, et, très avantageusement, entre 70 et 90 nm.

Dans d'autres modes de réalisation, la première couche de neutralisation peut être à son tour une bi-couche constituée d'une couche de $TiO_2$, disposée sur le substrat verrier, laquelle est revêtue d'une couche d'un oxyde de silicium, oxycarbure de silicium $SiO_xC_y$ ou oxynitrure de silicium $SiO_xN_y$, x étant inférieur ou égal à 2, l'épaisseur de $TiO_2$ étant de préférence comprise entre 5 et 15 nm et celle d'un oxyde, oxycarbure, ou oxynitrure de silicium étant comprise entre 15 et 40 nm.

En variante encore, la première couche de neutralisation peut être une bi-couche constituée d'une couche de $SnO_2$ ou ZnO disposée sur le substrat verrier, laquelle est revêtue d'une couche d'un oxyde de silicium, oxycarbure de silicium $SiO_xC_y$ ou oxynitrure de silicium $SiO_xN_y$, x étant inférieur ou égal à 2, l'épaisseur de la couche de $SnO_2$ ou ZnO étant comprise entre 15 et 35 nm et celle d'un oxyde, oxycarbure, ou oxynitrure de silicium étant comprise entre 15 et 40 nm.

La deuxième couche, de faible émissivité, qui, dans des modes de réalisations préférés, se trouve directement disposée au-dessus de la première couche de neutralisation, est essentiellement constituée de $SnO_2$:F, présente une émissivité E inférieure ou égale à 0,12, de préférence inférieure ou égale à 0,1, et a une épaisseur comprise entre 455 et 800 nm, et très avantageusement entre 455 et 740 nm. Une telle couche est fabriquée par des technologies de mises en oeuvre classiques, telles que la CVD. C'est cette couche qui confère les valeurs de faible émissivité au vitrage. Dans des modes de réalisation particuliers, le $SnO_2$:F peut en outre être dopé avec de l'oxyde de zirconium. Dans ce cas, le pourcentage atomique en zirconium (at. % Zr) dans la couche est compris entre 0,3 at.% et 3 at.%, préférentiellement entre 0,5 at.% et 2.0 at.%.

La troisième couche, disposée, selon des modes de réalisation préférés, au-dessus de la deuxième couche, de faible émissivité, est avantageusement un oxyde, oxycarbure ou oxynitrure de silicium, faisant donc partie avantageusement de la définition $SiO_x$, la préférence étant donnée au $SiO_2$. Les indices de réfraction sont préférablement compris entre 1,3 et 1,6. Le matériau de la troisième couche a l'avantage de ne pas être absorbant et présente un indice de réfraction bas, ce qui permet, dans le vitrage de l'invention, de réduire significativement la réflexion lumineuse (RI), ce qui augmente le FS. Cependant la gamme d'épaisseurs donnant la plus importante réduction de réflexion peut entraîner une mauvaise stabilité angulaire des couleurs en réflexion. Le meilleur compromis a donc été trouvé pour une épaisseur de cette couche comprise entre 40 et 65 nm ou entre 140 et 180 nm. De préférence, l'épaisseur de cette couche est comprise entre 40 et 60 nm, très avantageusement entre 45 et 60 nm. Bien que les épaisseurs comprises entre 140 et 180 nm permettent d'obtenir les effets recherchés, cette plage est toutefois moins préférée du fait de difficultés de mise en oeuvre techniques de telles épaisseurs et du risque d'encrassement notable des réacteurs.

Il convient de préciser que dans le cadre de l'invention, toutes les couches constitutives de l'empilage sont classiquement obtenues par des méthodes chimiques et/ou physiques de dépôt, telles que la CVD (« Chemical Vapor Déposition »), la PECVD (« Plasma Enhanced Chemical Vapor Déposition ») et la pulvérisation par magnétron, ou leur combinaison. Ces couches peuvent être déposées en ligne grâce à des dispositifs de traitement classiquement utilisés dans la technologie des verres dits « floatés ».

A titre d'exemple, la première couche, de neutralisation, et la troisième couche peuvent être déposées par pyrolyse chimique (CVD) à partir de précurseurs sous forme gazeuse contenant par exemple du silane ($SiH_4$), un gaz oxydant, tel que l'oxygène ou le dioxyde carbone ($CO_2$), de l'éthylène au besoin et de l'azote comme gaz vecteur, les flux de gaz étant dirigés sur la surface chaude du verre. Les proportions en chaque précurseur permettent le dépôt par exemple de $SiO_x$, x étant inférieur ou égal à 2. L'homme du métier peut se référer aux demandes WO 2010/107998, US 7,037,555, ou FR 2 666 325 sans être exhaustif.

Les couches de $SnO_2$ ou $SnO_2$:F, respectivement utilisées dans la première couche, de neutralisation, sur verre et pour former la deuxième couche, de faible émissivité, sont également préparées de façon connue de l'homme du métier, la préférence étant donnée à la CVD. Par CVD, cette couche est typiquement formée par l'intermédiaire de précurseurs d'étain qui peuvent être des dérivés organométalliques, tels que le monobutyl trichlorure d'étain (MBTC), ou les dérivés inorganiques, tels que le tétrachlorure d'étain ($SnCl_4$), de l'air, de l'eau sous forme de vapeur, de l'oxygène et pour la couche de $SnO_2$:F, une source fluorée pour le dopage, tel que HF ou acide trifluoroacétique et le cas échéant $HNO_3$ notamment pour la réduction du « haze » (WO2010/107998). Ces précurseurs gazeux sont avantageusement dirigés et déposés en ligne sur le verre chaud.

Les dépôts de $TiO_2$ faisant partie de la première couche, de neutralisation, sur verre sont préférentiellement effectués par des techniques de CVD. Dans le cas de la CVD, on utilise à la place des précurseurs d'étain et de silane, mentionnés plus haut, des précurseurs à base de dérivés organiques ou inorganiques de titane, tels que TTiP (tétra-isopropoxyde de titane) ou $TiCl_4$, comme décrit dans WO99/48828.

Selon des formes très avantageuses de réalisation, l'invention concerne un double-vitrage comportant deux substrats verriers transparents, dont l'un est un substrat verrier portant un revêtement de l'invention, lequel présente un $U \leq 1,4$ W/m$^2$.K, une émissivité inférieure ou égale à 0,12, de préférence inférieure ou égale à 0,1, et une valeur de facteur solaire d'au moins 73%, avantageusement d'au moins 75%, et, en particulier, compris entre 75 et 81%. De tels double-vitrages ont été décrits plus haut et sont généralement ceux disponibles dans le commerce. Dans de tels vitrages, un seul substrat verrier est recouvert de l'empilage de l'invention, lequel est usuellement placée en position « $P_3$ », c'est-à-dire sur le substrat de verre le plus intérieur, les couches étant dirigées vers l'extérieur. Dans ce cas, le WER présente également des valeurs positives, et ceci n'est possible que pour un châssis le permettant, typiquement représentant 25% de la surface de la fenêtre et dont le U du châssis est au plus 1,2 W/m$^2$.K. On définit ici un châssis de référence représentant 25% de la surface de la fenêtre et dont le U est au plus 1,2 W/m$^2$.K.

A partir de ce double-vitrage, on réalise une fenêtre comprenant un châssis de référence tel que défini ici et un double-vitrage de l'invention présentant un WER ayant des valeurs supérieures ou égales à zéro, en particulier comprises entre 1 et 10 kWh/m$^2$ /an.

Selon d'autres formes de réalisation, l'invention concerne un triple-vitrage comportant trois substrats verriers transparents, dont l'un au moins est un substrat verrier portant un revêtement de l'invention, lequel présente un $U \leq 1,1$ Wjm$^2$.K, une émissivité inférieure ou égale à 0,12 et une valeur de facteur solaire d'au moins 64%, ces dernières étant habituellement en position « $P_5$ », c'est-à-dire sur le substrat de verre le plus intérieur, les couches étant dirigées vers l'extérieur, les deux autres substrats étant les plus extérieurs. Dans le cas où deux des trois substrats verriers sont revêtus des couches selon l'invention, ces dernières sont habituellement en position P2 et P5. Dans ce cas, le WER présente également des valeurs positives, et ceci n'est possible que pour un châssis le permettant, typiquement représentant 25% de la surface de la fenêtre et dont le U du châssis est égal 1,2 Wjm$^2$.K. Très avantageusement, on peut atteindre des valeurs de FS comprises entre 64% et 75%.

A partir de ce triple-vitrage, on réalise une fenêtre comprenant un châssis de référence tel que défini ici et un double-vitrage de l'invention présentant un WER ayant des valeurs supérieures ou égales à zéro, en particulier comprises entre 1 et 10 kWh/m$^2$ /an.

Comme indiqué plus haut, le double ou triple vitrage présente une neutralité de couleur à divers angles d'observation, avec des valeurs en réflexion à un angle d'observation compris entre 8° et 55°-Illuminant D65, de a*<o, avantageusement $-1 \leq a^* \leq -3$, et de b*<5, préférentiellement $-6 \leq b^* \leq 5$, avantageusement $-5 \leq b^* \leq 5$, et très avantageusement $-2 \leq b^* \leq 2$. Les valeurs de $\Delta$a*b* pour les double- et triple-vitrages sont avantageusement d'au plus 3,5, de préférence d'au plus 3.

Il n'est pas exclu que, pour ces double- ou triple-vitrages, les autres substrats verriers, ceux non revêtus des couches de l'invention, puissent à leur tour être revêtus d'autres couches de substrats spécifiques, telles des couches anti-reflet. Il n'est pas exclu non plus que le substrat revêtu de couches de l'invention porte également des couches anti-reflet sur la face opposée à celle revêtue de couche de l'invention.

Selon un autre aspect, l'invention concerne l'utilisation, dans un double vitrage comportant deux substrats verriers transparents, dont l'un est un substrat verrier portant un revêtement de l'invention, comprenant, dans l'ordre, une première couche de neutralisation de couleurs en réflexion, une deuxième couche, de faible émissivité, constituée essentiellement de SnO$_2$:F, d'épaisseur comprise entre 455 et 800 nm, et une troisième couche, constituée essentiellement de SiO$_x$, x étant inférieur ou égal à 2, d'épaisseur comprise entre 40 et 65 nm ou entre 140 et 180 nm, pour conférer des valeurs de facteur solaires d'au moins 73%, d'émissivité inférieures ou égales à 0,12, le vitrage ayant un coefficient thermique, U, inférieur ou égal à 1,4 W/m$^2$.K. Très avantageusement, les valeurs FS sont comprises entre 75 et 81%.

Selon un autre aspect, l'invention concerne l'utilisation, dans un triple-vitrage comportant trois substrats verriers transparents, dont l'un est un substrat verrier portant un revêtement de l'invention, comprenant, dans l'ordre, une première couche de neutralisation de couleurs en réflexion, une deuxième couche, de faible émissivité, constituée essentiellement de SnO$_2$:F, d'épaisseur comprise entre 455 et 800 nm, et une troisième couche, constituée essentiellement de SiO$_x$, x étant inférieur ou égal à 2, d'épaisseur comprise entre 40 et 65 nm ou entre 140 et 180 nm, pour conférer des valeurs de facteur solaire d'au moins 64%, d'émissivité inférieures ou égales à 0,12, le vitrage ayant un coefficient thermique, U, inférieur ou égal à 1,1 Wjm$^2$.K. Très avantageusement, FS est compris entre 65 et 75%.

Avantageusement, lorsque ledit revêtement comprenant les couches de l'invention est utilisé dans un double ou triple vitrage, celui-ci présente une neutralité de couleur à divers angles d'observation, avec des valeurs en réflexion à un angle d'observation compris entre 8° et 55°-Illuminant D65, de a*<o, avantageusement $-1 \leq a^* \leq -3$, et de b*<5, préférentiellement $-6 \leq b^* \leq 5$, avantageusement $-5 \leq b^* \leq 5$, et très avantageusement $-2 \leq b^* \leq 2$. Les valeurs de $\Delta$a*b* pour les double- et triple-vitrages sont avantageusement d'au plus 3,5, de préférence d'au plus 3.

Les exemples qui suivent illustrent l'invention sans en limiter la portée.

Exemples 1-9

Un double-vitrage a été fabriqué, lequel comporte deux substrats de verres clairs ayant une épaisseur respective de 4 mm, séparés l'un de l'autre de 15 mm avec un remplissage d'argon à 90%. Un des substrats est revêtu de $SiO_x$, x inférieur à 2, puis de $SnO_2$ :F et, enfin, de $SiO_2$. Ce double-vitrage est ensuite inséré dans un châssis isolant qui représente 25% de la surface de la fenêtre et présentant un U de 1.2 $W/m^2.K$, et la valeur de L de la fenêtre est fixée à 0,03 $W/m^2.K$.

On a fait varier les épaisseurs respectives des couches. Les résultats en termes de FS, de a* et b*, couleur en réflexion, et stabilité angulaire de la couleur en réflexion sont présentés dans le Tableau 1 qui suit. Les valeurs de FS sont mesurées selon la norme EN 410. Les valeurs de a* et b* sont données pour trois angles d'observation 8°, 30° et 55° et sont mesurés selon la norme illuminant D65.

Le Tableau 2 donne les résultats de « haze », de E (émissivité), de U(double-vitrage) et de WER (fenêtre).

Tableau 1

| Exemple | SiOx (nm) | SnOb: F (nm) | SiO2 (nm) | FS (%) | a* 8°; 30°; 55° | b* 8°; 30°; 55° | Couleur en réflexion | $\Delta$a*b * (300) | $\Delta$a*b * (55°) |
|---|---|---|---|---|---|---|---|---|---|
| 1 | 74 | 456 | 43 | 75 | -1,1; -0,7; -1,5 | 1,9; 2,0 ; 0,8 | Vert-jaunâtre | 0.41 | 1.17 |
| 2 | 60 | 740 | 60 | 76 | -0,9; -0,4; -0,1 | 3,3; 1,9; 2,2 | Vert-jaunâtre | 1.49 | 1.36 |
| 3 | 88 | 519 | 162 | 75 | -3,2; -2,9; -1,9 | -2,7; 0.0; -4,4 | Bleu-vert | 2.72 | 2.14 |
| 4 | 92 | 574 | 44 | 75 | -0,8; -0,5; -0,3 | 1,9; 2,0; 1,0 | Vert-jaunâtre | 0.32 | 1.03 |
| 5 | 93 | 624 | 44 | 75 | -0,1; -0,6; -1,0 | 1,9; 5,0; 0,6 | Vert-jaunâtre | 3.14 | 1.58 |
| 6 | 75 | 460 | 65 | 76 | -0.3; -0.5; -1.3 | 3.2; 4.3; 1.6 | Vert-jaunâtre | 1.1 | 1.9 |
| 7 | 75 | 460 | 155 | 75 | -3.7; -2.2; -0.5 | -4.9; -6.6; -4.0 | Bleu-vert | 2.2 | 3.4 |
| 8 | 75 | 745 | 65 | 76 | -0.4; -0.3; -0.1 | 3.0; 3.7; 2.2 | Vert-jaunâtre | 0.7 | 0.9 |
| 9 | 75 | 745 | 140 | 75 | -2.0; -2.0; -0.9 | -6.5; -5.3; -3.6 | Bleu-vert | 1.2 | 3.1 |

Tableau 2

| Exemple | $SiO_x$ (nm) | $SnO_2$ F (nm) | $SiO_2$ (nm) | Haze (%) | E | U(double-vitrage) 4 mm/15 mm - 90% Ar/4 mm ($W/m^2.K$) | WER (kWh/m$^2$/an) |
|---|---|---|---|---|---|---|---|
| 1 | 74 | 456 | 43 | 0,4 | 0,10 | 1,36 | + 1,0 |
| 2 | 60 | 740 | 60 | 0,7 | 0,0 7 | 1,26 | + 7,6 |
| 3 | 88 | 519 | 162 | 0,5 | 0,0 9 | 1,32 | + 3,0 |
| 4 | 92 | 574 | 44 | 0,5 | 0,0 9 | 1,32 | + 3,0 |
| 5 | 93 | 624 | 44 | 0,6 | 0,0 8 | 1,29 | + 4,6 |
| 6 | 75 | 460 | 65 | 0.4 | 0.10 | 1.36 | +2.5 |
| 7 | 75 | 460 | 155 | 0.4 | 0.10 | 1.36 | +1.0 |
| 8 | 75 | 745 | 65 | 0.7 | 0.07 | 1.26 | +7.6 |

(suite)

| Exemple | $SiO_x$ (nm) | $SnO_2$ F (nm) | $SiO_2$ (nm) | Haze (%) | E | U(double-vitrage) 4 mm/15 mm - 90% Ar/4 mm (W/m$^2$.K) | WER (kWh/m$^2$/an) |
|---|---|---|---|---|---|---|---|
| 9 | 75 | 745 | 140 | 0.7 | 0.07 | 1.26 | +6.1 |

Les résultats du Tableau 1 montrent que les Exemples 1, 2, 4 et 8 sont ceux pour lesquels la stabilité est la meilleure, tout en fournissant des teintes de couleur en réflexion très acceptables, car ils évitent la réflexion dans le rouge. Pour les Exemples 3, 5, 6, 7 et 9 la couleur en réflexion est très acceptable avec toutefois une stabilité de celle-ci légèrement moins favorable, mais qui reste cependant dans les limites des performances recherchées pour le vitrage. La fabrication à l'échelle industrielle est la plus favorable dans les exemples 1 et 6. Il est donc bien recherché un compromis, d'une part, entre les matériaux des couches et leurs épaisseurs relatives et, d'autre part, la faisabilité à l'échelle industrielle (gains de productivité, coûts, facilité de fabrication, etc.).

Les résultats du Tableau 2 indiquent clairement les performances atteintes pour ces double-vitrages, notamment en termes de WER lesquels sont tous positifs.

On considère, à titre comparatif, d'abord des vitrages disponibles dans le commerce, Exemple A : Verre/$SiO_x$/$SnO_2$ :F (300 nm), et Exemple B : Verre/$SiO_x$/$SnO_2$ :F (450 nm). Le Tableau 3 donne les valeurs de FS, d'émissivité et de WER pour des double-vitrages fabriqués à partir de tels empilages.

Tableau 3

| Exemple | $SiO_x$ (nm) | $SnO_2$ : F (nm) | $SiO_2$ (nm) | E | U(double-vitrage) 4 mm/15 mm - 90% Ar/4 mm (W/m$^2$.K) | FS (%) | WER (kWh/m$^2$ /an) |
|---|---|---|---|---|---|---|---|
| A | 75 | 320 | 0 | 0,15 | 1,50 | 72,6 | -9,8 |
| B | 75 | 450 | 0 | 0,10 | 1,36 | 72,7 | - 2,4 |

Les résultats des mesures de ces paramètres démontrent que les propriétés recherchées ne sont pas atteintes, les valeurs de WER étant négatives.

On considère ensuite, à titre comparatif, des empilages présentant sur le verre une couche de $SiO_x$, x inférieur à 2, puis une couche de $SnO_2$ :F et, enfin, une couche de $SiO_2$, mais ne faisant pas partie de l'invention. Le tableau 4 montre les résultats en termes de FS, de a* & b*, couleur en réflexion, et stabilité angulaire de la couleur en réflexion pour des double-vitrages fabriqués à partir de tels empilages.

Tableau 4

| Exemple | SiOx (nm) | $SnO_2$: F (nm) | SiO 2 (nm) | FS (%) | a* 8°; 30° 55° | b* 8°; 30° 55° | Couleur en réflexion | $\Delta$a*b * (30°) | $\Delta$a*b * (55°) |
|---|---|---|---|---|---|---|---|---|---|
| C | 75 | 460 | 70 | 77 | 0.0; -0.5; -1.3 | 2.8; 4.3; 1.7 | orange | 1.6 | 1.7 |
| D | 75 | 460 | 120 | 76 | -0.3;-1.6; -0.3 | -7.3;-5.2; -1.7 | Bleu-vert | 2.4 | 5.6 |
| E | 75 | 745 | 70 | 76 | -0.2;-0.2; 0.0 | 2.7; 3.6; 2.3 | Vert-jaunâtr e | 0.9 | 0.5 |
| F | 75 | 745 | 120 | 76 | -0.5;-1.2; -0.1 | -6.6;-4.3; -1.7 | Bleu-vert | 2.4 | 5.0 |

Les exemples C et F, bien que présentant une très faible différence d'épaisseur de la couche $SiO_2$ par rapport aux exemples 6 et 8, présentent des couleurs en réflexion non acceptables.

L'exemples D bien que présentant des couleurs en réflexion assez acceptables, présente des variations de couleur trop importantes. L'exemple E présente des couleurs en réflexion acceptables à 8°, mais la valeur de a* passe à 0 pour un angle de 55°.

Exemples 10-14

Un triple-vitrage a été fabriqué, lequel comporte trois substrats de verres clairs ayant une épaisseur respective de 4 mm, séparés les des autres de 15 mm avec un remplissage d'argon à 90%. Un des substrats, en position P5, est revêtu de $SiO_xC_y$, x inférieur à 2, d'indice de réfraction 1,69, puis de $SnO_2$:F et, enfin, de $SiO_2$. Ce triple-vitrage est ensuite inséré dans un châssis isolant qui représente 25% de la surface de la fenêtre et présentant un U de 1.2 $W/m^2.K$, et la valeur de L de la fenêtre est fixée à 0,03 $Wjm^2.K$.

On a fait varier les épaisseurs respectives des couches. Les résultats en termes de FS, de a* & b*, couleur en réflexion, sont présentés dans le Tableau 5 qui suit. Les valeurs de FS sont mesurées selon la norme EN 410. Les valeurs de a* et b* sont données pour trois angles d'observation 8°; 30° et 55° et sont mesurées selon la norme illuminant D65.

Le Tableau 6 donne les résultats de « haze », de E, de U(triple-vitrage) et de WER (fenêtre).

Tableau 5

| Exemple | $SiO_x$ (nm) | $SnO_2$ : F (nm) | $SiO_2$ (nm) | FS (%) | a* 8 ;30 ;55° | b* 8 ;30 ;55° | Couleur en réflexion |
|---|---|---|---|---|---|---|---|
| 10 | 74 | 456 | 43 | 66 | -1,4; -1,4; - 1,7 | 1,3; 1,8; 0,5 | Vert-jaunâtr e |
| 11 | 60 | 740 | 60 | 67 | -1,3; -1,1;-0,9 | 2,0; 1,6; 1,3 | Vert-jaunâtr e |
| 12 | 88 | 519 | 162 | 66 | -3,0; -2,8;-1,9 | -1,9; 0,5; - 2,5 | Bleu-vert |
| 13 | 92 | 574 | 44 | 66 | -1,2; -1,2;-1,0 | 1,2; 1,8; 0,6 | Vert-jaunâtr e |
| 14 | 93 | 624 | 44 | 66 | -0,8; -1,3;-1,4 | 1,2; 3,9; 0,4 | Vert-jaunâtr e |

Tableau 6

| Exemple | $SiO_x$ (nm) | $SnO_2$ F (nm) | $SiO_2$ (nm) | Haze (%) | Emissivité | U(triple-vitrage) 4 mm/15 mm - 90% Ar/4 mm/15 mm 90%Ar/4 mm ($W/m^2.K$) | WER (kWh/ $m^2$ /an) |
|---|---|---|---|---|---|---|---|
| 10 | 74 | 456 | 43 | 0,4 | 0,10 | 1,05 | +3,6 |
| 11 | 60 | 740 | 60 | 0,7 | 0,07 | 0,98 | +8,7 |
| 12 | 88 | 519 | 162 | 0,5 | 0,09 | 1,02 | +5,2 |
| 13 | 92 | 574 | 44 | 0,5 | 0,09 | 1,02 | +5,2 |
| 14 | 93 | 624 | 44 | 0,6 | 0,08 | 1,00 | +6,2 |

Les résultats du Tableau 5 montrent que les Exemples 10, 11 et 13 sont ceux pour lesquels la stabilité est la meilleure, tout en fournissant des teintes de couleur en réflexion très acceptables, car ils évitent la réflexion dans le rouge. Pour les Exemples 12 et 14, la couleur en réflexion est très acceptable avec toutefois une stabilité de celle-ci légèrement moins favorable, mais qui reste cependant dans les limites des performances recherchées pour le vitrage. La fabrication à l'échelle industrielle est la plus favorable dans l'Exemple 10. Il est donc bien recherché un compromis, d'une part, entre les matériaux des couches et leurs épaisseurs relatives et, d'autre part, la faisabilité à l'échelle industrielle (gains de productivité, coûts, facilité de fabrication, etc.).

Les résultats du Tableau 6 indiquent clairement les performances atteintes pour ces triple-vitrages, notamment en termes de WER lesquels sont tous positifs.

On considère, à titre comparatif, des vitrages disponibles dans le commerce, Exemple G :Verre/$SiO_x$/$SnO_2$ :F (300 nm), et Exemple H : Verre/$SiO_x$/$SnO_2$ :F (450 nm). Le Tableau 7 donne les valeurs de FS, d'émissivité, de U et de WER pour des triple-vitrages fabriqués à partir de tels empilages.

Tableau 7

| Exemple | $SiO_x$ (nm) | $SnO_2$ :F (nm) | $SiO_2$ (nm) | Emissivité | U(triple-vitrage) 4 mm/15 mm - 90% Ar/4 mm/15 mm - 90% Ar/4 mm ($W/m^2.K$) | FS (%) | WER (kWh/ $m^2$/an) |
|---|---|---|---|---|---|---|---|
| G | 75 | 320 | 0 | 0,15 | 1,13 | 63,5 | -4,2 |

(suite)

| Exemple | $SiO_x$ (nm) | $SnO_2$ :F (nm) | $SiO_2$ (nm) | Emissivité | U(triple-vitrage) 4 mm/15 mm - 90% Ar/4 mm/15 mm - 90% Ar/4 mm ($W/m^2$.K) | FS (%) | WER (kWh/ $m^2$/an) |
|---|---|---|---|---|---|---|---|
| H | 75 | 450 | 0 | 0,10 | 1,05 | 63,5 | -0,1 |

Les résultats des mesures de ces paramètres démontrent que les propriétés recherchées ne sont pas atteintes, les valeurs de WER étant négatives.

**Revendications**

1. Substrat verrier transparent portant un revêtement comprenant dans l'ordre :

   - une première couche de neutralisation de couleurs en réflexion,
   - une deuxième couche, de faible émissivité, constituée essentiellement de $SnO_2$:F, d'épaisseur comprise entre 455 et 800 nm, et
   - une troisième couche, constituée essentiellement de SiOx, x étant inférieur ou égal à 2, d'épaisseur comprise entre 40 et 65 nm ou entre 140 et 180 nm.

2. Substrat verrier selon la revendication 1, dans lequel la première couche de neutralisation est une mono-couche constituée essentiellement d'oxynitrures de silicium $SiO_xN_y$, ou d'oxycarbures de silicium $SiO_xC_y$, x étant inférieur à 2, dont l'indice de réfraction se situe dans la plage 1,65-1,75, l'épaisseur de cette couche étant comprise entre 55 et 95 nm.

3. Substrat verrier selon la revendication 1, dans lequel la première couche de neutralisation est une bi-couche constituée d'une couche de $TiO_2$, disposée sur le substrat verrier, laquelle est revêtue d'une couche d'un oxyde de silicium, oxycarbure de silicium $SiO_xC_y$ ou oxynitrure de silicium $SiO_xN_y$, x étant inférieur ou égal à 2, l'épaisseur de $TiO_2$ étant de préférence comprise entre 5 et 15 nm et celle d'un oxyde, oxycarbure, ou oxynitrure de silicium étant comprise entre 15 et 40 nm.

4. Substrat verrier selon la revendication 1, dans lequel la première couche de neutralisation est une bi-couche constituée d'une couche de $SnO_2$ ou ZnO disposée sur le substrat verrier, laquelle est revêtue d'une couche d'un oxyde de silicium, oxycarbure de silicium $SiO_xC_y$ ou oxynitrure de silicium $SiO_xN_y$, x étant inférieur ou égal à 2, l'épaisseur de la couche de $SnO_2$ ou ZnO étant comprise entre 15 et 35 nm et celle d'un oxyde, oxycarbure, ou oxynitrure de silicium étant comprise entre 15 et 40 nm.

5. Substrat verrier selon la revendication 1, dans lequel la première couche de neutralisation est une couche mixte constituée essentiellement d'oxydes de Sn et Si, dont l'épaisseur est comprise entre 55 et 95 nm.

6. Substrat verrier selon l'une des revendications 1 à 5, dans lequel l'épaisseur de la deuxième couche de faible émissivité est entre 455 et 740 nm.

7. Substrat verrier selon l'une des revendications 1 à 6, dans lequel la troisième couche constituée essentiellement de $SiO_x$, présente une épaisseur comprise entre 43 et 60 nm.

8. Double-vitrage comportant deux substrats verriers transparents, dont l'un est un substrat verrier selon l'une des revendications 1 à 7, lequel présente un U $\leq$ 1,4 $W/m^2$.K, une émissivité inférieure ou égale à 0,12 et une valeur de facteur solaire d'au moins 73%,

9. Double-vitrage selon la revendication 8, présentant une valeur de facteur solaire comprise entre 75% et 81%.

10. Double-vitrage selon la revendication 8 ou 9, présentant une valeur de $\Delta$a*b* d'au plus 3,5.

11. Fenêtre comprenant un châssis de référence tel que défini ici et un double-vitrage selon l'une des revendications 8 à 10, présentant un WER ayant une valeur supérieure ou égale à zéro, en particulier comprise entre 1 et 10

kWh/m$^2$ /an.

12. Triple-vitrage comportant trois substrats verriers transparents, dont l'un au moins est un substrat verrier selon l'une des revendications 1 à 7, lequel présente un U $\leq$ 1,1 W/m$^2$.K, une émissivité inférieure ou égale à 0,12 et une valeur de facteur solaire d'au moins 64%.

13. Triple-vitrage selon la revendication 12, présentant une valeur de facteur solaire comprise entre 65% et 75%.

14. Triple-vitrage selon la revendication 12 ou 13, présentant une valeur de $\Delta$a*b* d'au plus 3,5.

15. Fenêtre comprenant un châssis de référence tel que défini ici et un triple-vitrage selon l'une des revendications 12 à 14, présentant un WER ayant une valeur supérieure ou égale à zéro, en particulier comprise entre 1 et 10 kWh/m$^2$ /an.

**Patentansprüche**

1. Transparentes Glassubstrat mit einer Beschichtung, umfassend in dieser Reihenfolge:

   - eine erste Schicht zur Neutralisation von Reflexionsfarben,
   - eine zweite Schicht mit schwachem Emissionsvermögen, die im Wesentlichen aus SnO$_2$:F besteht, mit einer Dicke zwischen 455 und 800 nm, und
   - eine dritte Schicht, die im Wesentlichen aus SiO$_x$ besteht, wobei x kleiner oder gleich 2 ist, mit einer Dicke zwischen 40 und 65 nm oder zwischen 140 und 180 nm.

2. Glassubstrat nach Anspruch 1,
   wobei die erste Neutralisationsschicht eine Einzelschicht ist, die im Wesentlichen aus Siliciumoxynitriden SiO$_x$N$_y$ oder Siliciumoxycarbiden SiO$_x$C$_y$ besteht, wobei x kleiner als 2 ist, deren Brechungsindex im Bereich von 1,65 bis 1,75 liegt, wobei die Dicke dieser Schicht zwischen 55 und 95 nm liegt.

3. Glassubstrat nach Anspruch 1,
   wobei die erste Neutralisationsschicht eine Doppelschicht ist, welche aus einer Schicht aus TiO$_2$ besteht, die auf dem Glassubstrat angeordnet ist, und die mit einer Schicht aus Siliciumoxid, Siliciumoxycarbid SiO$_x$C$_y$ oder Siliciumoxynitrid SiO$_x$N$_y$ beschichtet ist, wobei x kleiner oder gleich 2 ist, wobei die Dicke von TiO$_2$ vorzugsweise zwischen 5 und 15 nm liegt und jene von Siliciumoxid, - oxycarbid oder -oxynitrid zwischen 15 und 40 nm liegt.

4. Glassubstrat nach Anspruch 1,
   wobei die erste Neutralisationsschicht eine Doppelschicht ist, welche aus einer Schicht aus SnO$_2$ oder ZnO besteht, die auf dem Glassubstrat angeordnet ist, und die mit einer Schicht aus Siliciumoxid, Siliciumoxycarbid SiO$_x$C$_y$ oder Siliciumoxynitrid SiO$_x$N$_y$ beschichtet ist, wobei x kleiner oder gleich 2 ist, wobei die Dicke der Schicht aus SnO$_2$ oder ZnO vorzugsweise zwischen 15 und 35 nm liegt und jene von Siliciumoxid, -oxycarbid oder -oxynitrid zwischen 15 und 40 nm liegt.

5. Glassubstrat nach Anspruch 1,
   wobei die erste Neutralisationsschicht eine gemischte Schicht ist, die im Wesentlichen aus Oxiden von Sn und Si besteht, deren Dicke zwischen 55 und 95 nm liegt.

6. Glassubstrat nach einem der Ansprüche 1 bis 5,
   wobei die Dicke der zweiten Schicht mit schwachem Emissionsvermögen zwischen 455 und 740 nm liegt.

7. Glassubstrat nach einem der Ansprüche 1 bis 6, wobei die dritte Schicht, die im Wesentlichen aus SiO$_x$ besteht, eine Dicke zwischen 43 und 60 nm aufweist.

8. Doppelverglasung, umfassend zwei transparente Glassubstrate, wovon eines ein Glassubstrat nach einem der Ansprüche 1 bis 7 ist, welche einen U $\leq$ 1,4 W/m$^2$.K, ein Emissionsvermögen kleiner oder gleich 0,12 und einen Wert des Solarfaktors von mindestens 73 % aufweist.

9. Doppelverglasung nach Anspruch 8,

welche einen Wert des Solarfaktors zwischen 75 % und 81 % aufweist.

10. Doppelverglasung nach Anspruch 8 oder 9, welche einen Wert $\Delta a^*b^*$ von höchstens 3,5 aufweist.

11. Fenster, umfassend einen Referenzrahmen, wie hier definiert, und eine Doppelverglasung nach einem der Ansprüche 8 bis 10, welches eine WER mit einem Wert größer oder gleich null, insbesondere zwischen 1 und 10 kWh/m$^2$/Jahr, aufweist.

12. Dreifachverglasung, umfassend drei transparente Glassubstrate, wovon mindestens eines ein Glassubstrat nach einem der Ansprüche 1 bis 7 ist, welche einen $U \leq 1,1$ W/m$^2$.K, ein Emissionsvermögen kleiner oder gleich 0,12 und einen Wert des Solarfaktors von mindestens 64 % aufweist.

13. Dreifachverglasung nach Anspruch 12, welche einen Wert des Solarfaktors zwischen 65 % und 75 % aufweist.

14. Dreifachverglasung nach Anspruch 12 oder 13, welche einen Wert $\Delta a^*b^*$ von höchstens 3,5 aufweist.

15. Fenster, umfassend einen Referenzrahmen, wie hier definiert, und eine Dreifachverglasung nach einem der Ansprüche 12 bis 14, welches eine WER mit einem Wert größer oder gleich null, insbesondere zwischen 1 und 10 kWh/m$^2$/Jahr, aufweist.

**Claims**

1. Transparent glass substrate bearing a coating comprising, in order:

   - a first layer for neutralizing colours in reflection,
   - a low-emissivity second layer formed essentially of SnO$_2$:F, having a thickness of between 455 and 800 nm, and
   - a third layer, formed essentially of SiO$_x$, x being less than or equal to 2, having a thickness of between 40 and 65 nm or between 140 and 180 nm.

2. Glass substrate according to Claim 1, wherein the neutralizing first layer is a monolayer formed essentially of silicon oxynitrides SiO$_x$N$_y$, or silicon oxycarbides SiO$_x$C$_y$, x being less than 2, the refractive index of which lies within the range 1.65-1.75, the thickness of this layer being between 55 and 95 nm.

3. Glass substrate according to Claim 1, wherein the neutralizing first layer is a bilayer formed of a layer of TiO$_2$, positioned on the glass substrate, which is coated with a layer of a silicon oxide, silicon oxycarbide SiO$_x$C$_y$, or silicon oxynitride SiO$_x$N$_y$, x being less than or equal to 2, the thickness of TiO$_2$ preferably being between 5 and 15 nm, and that of a silicon oxide, oxycarbide or oxynitride being between 15 and 40 nm.

4. Glass substrate according to Claim 1, wherein the neutralizing first layer is a bilayer formed of a layer of SnO$_2$ or ZnO positioned on the glass substrate, which is coated with a layer of a silicon oxide, silicon oxycarbide SiO$_x$C$_y$, or silicon oxynitride SiO$_x$N$_y$, x being less than or equal to 2, the thickness of the layer of SnO$_2$ or ZnO being between 15 and 35 nm and that of a silicon oxide, oxycarbide or oxynitride being between 15 and 40 nm.

5. Glass substrate according to Claim 1, wherein the neutralizing first layer is a mixed layer formed essentially of oxides of Sn and Si, the thickness of which is between 55 and 95 nm.

6. Glass substrate according to one of Claims 1 to 5, wherein the thickness of the low-emissivity second layer is between 455 and 740 nm.

7. Glass substrate according to one of Claims 1 to 6, wherein the third layer formed essentially of SiO$_x$ has a thickness of between 43 and 60 nm.

8. Double glazing comprising two transparent glass substrates, one of which is a glass substrate according to one of Claims 1 to 7, which has a U-value $\leq 1.4$ W/m$^2$.K, an emissivity of less than or equal to 0.12, and a solar factor value of at least 73%.

**9.** Double glazing according to Claim 8, having a solar factor value of between 75% and 81%.

**10.** Double glazing according to Claim 8 or 9, having a value of $\Delta$a*b* of at most 3.5.

**11.** Window comprising a reference frame as defined here and double glazing according to one of claims 8 to 10 having a WER that has a value greater than or equal to zero, in particular between 1 and 10 kWh/m$^2$/year.

**12.** Triple glazing unit comprising three transparent glass substrates, at least one of which is a glass substrate according to one of Claims 1 to 7, which has a U-value $\leq$ 1.1 W/m$^2$.K, an emissivity of less than or equal to 0.12 and a solar factor value of at least 64%.

**13.** Triple glazing according to Claim 12, having a solar factor value of between 65% and 75%.

**14.** Triple glazing unit according to Claim 12 or 13, having a value of $\Delta$a*b* of at most 3.5.

**15.** Window comprising a reference frame as defined here and triple glazing unit according to one of Claims 12 to 14, having a WER that has a value greater than or equal to zero, in particular between 1 and 10 kWh/m$^2$/year.

**EP 2 714 608 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9425410 A
- US 6174599 B1
- US 4377613 A
- US 4187336 A
- US 4419386 A
- WO 2010107998 A
- US 7037555 B
- FR 2666325
- WO 9948828 A